# DEMANDE DE BREVET EUROPEEN

(11) **EP 4 164 014 A1**
(43) Date de publication de la demande: **12.04.2023**
(21) Numéro de dépôt: 21306404.1
(22) Date de dépôt: 06.10.2021
(51) Int. Cl.: H01M 10/04, H01M 10/613, H01M 10/647, H01M 10/6551, H01M 10/6554, H01M 10/6556, H01M 50/209, H01M 50/224, H01M 50/264, H01M 50/278, H01M 50/289

(54) **ARCHITECTURE DE PACK BATTERIE**

(71) Demandeur: E4V, 72000 Le Mans (FR)
(72) Inventeur: GRAY, Oliver, 49125 Briollay (FR); FLANDRE, Loic, 72560 Changé (FR); NYCEK, Florian, 72700 Saint-Georges-du-Bois (FR)
(74) Mandataire: Ipside

(57) **Abrégé**

L'invention concerne une batterie (100) électrique comportant un ensemble de cellules (102) prismatiques génératrices d'énergie, dans laquelle :
- la batterie comporte des colonnes (103, 104) formées par au moins certaines desdites cellules, les cellules (102) des colonnes (103, 104) étant plaquées les unes contre les autres en étant maintenues solidaires entre elles par un moyen de compression (105, 106) exerçant sur les cellules (102) une compression le long de ou sensiblement le long de l'axe longitudinal des colonnes,
- au moins un composant d'isolation électrique est interposée entre deux cellules génératrices d'énergie (102) consécutives de colonnes (103, 104),
- l'assemblage d'une colonne (103, 104) de cellules (102) est réalisé dans un tube (101) extrudé en aluminium, ladite colonne (103, 104) de cellules (102) étant constituée d'une pluralité de cellules (102) en interface avec une face interne d'un tube en aluminium.

## Description

### Domaine technique

La présente invention se rapporte au domaine des batteries.

La présente invention concerne plus particulièrement une architecture de pack batterie.

### Technique antérieure

Des packs batterie en caisse métallique conductrice ont déjà été développés dans le cas de cellules prismatiques. Ils permettent d'extraire la chaleur des cellules par conduction thermique entre le fond de la cellule et le fond du pack, ou bien une autre paroi dans le cas où la rotation dans l'espace et le maintien sont adéquats.
On connaît dans l'état de la technique le brevet français N° FR 2 963 484 B1 au nom d'E4V. Ce brevet français se rapporte à une batterie électrique et à un engin motorisé comportant au moins une telle batterie. Ce brevet français concerne plus particulièrement une batterie électrique comportant un boîtier et un ensemble de cellules génératrices d'énergie. Selon cette invention : la batterie comporte au moins un arrangement longitudinal formé par au moins certaines des cellules, les cellules de l'arrangement étant plaquées les unes contre les autres en étant maintenues solidaires entre elles par un moyen de compression exerçant sur les cellules une compression le long de ou sensiblement le long de l'axe longitudinal de l'arrangement. De plus, l'arrangement longitudinal est fixé au boîtier par l'intermédiaire du moyen de compression, lequel est au moins en partie fixé au boîtier par des organes de fixation.
On connaît également dans l'état de la technique le brevet N° FR 2 963 486 B1 au nom d'E4V. Ce brevet français se rapporte à un système de refroidissement de batterie électrique. Ce brevet français se rapporte plus particulièrement à un système de refroidissement d'une batterie électrique comportant un boîtier et au moins un arrangement longitudinal de cellules génératrices d'énergie placé dans le boîtier.
Selon cette invention, le système comporte au moins une couche électriquement isolante et thermiquement conductrice, qui relie thermiquement les cellules de l'arrangement avec une même surface de dissipation thermique placée dans le boîtier afin d'assurer une évacuation uniforme de l'énergie thermique générée par chacun des cellules vers la surface, et des moyens de refroidissement destinés à venir refroidir la surface.
On connaît également dans l'état de la technique le brevet français N° FR 2 963 591 B1 qui se rapporte à un pack de batteries électrique et à un engin motorisé comportant au moins un tel pack de batteries. L'invention objet de ce brevet français propose de réaliser un pack de batteries sous forme de modules facilitant sa conception et sa maintenance. A cet effet, le pack comporte un nombre m d'arrangements longitudinaux de cellules génératrices d'énergie. Dans chaque arrangement, un nombre n ou un groupe de cellules sont associés en série, de manière standardisée. Le nombre n dépend de la tension souhaitée. De même, dans chaque arrangement, un nombre p de cellules sont associées, de manière standardisée, en parallèle. Le nombre p dépend du courant nominal souhaité.
On connaît également dans l'état de la technique la demande internationale N° WO 2019/138385 A1, qui se rapporte à un pack batteries pour refroidir des batteries à cellules. Selon cette invention, un bloc-batterie comporte une pluralité de modules cellulaires, un système de gestion de batterie, des dissipateurs de chaleur, un boîtier et un couvercle. Le module de cellules comporte un certain nombre de cellules cylindriques individuelles dans un groupe, maintenues en position par des supports de cellules isolants appropriés qui sont conçus non seulement pour maintenir les cellules en position, mais également pour résister à la déformation due aux chocs et aux vibrations rencontrés dans les applications véhiculaires. Les cellules du module sont interconnectées électriquement avec bandes de nickel épaisses, soudées par des électrodes de forme spéciale aux bornes de la cellule pour obtenir la tension et la puissance nécessaires avec une perte électrique minimale.

La technologie des packs ainsi développés a privilégié au départ des bacs en aluminium, ou en acier selon une structure mécanosoudée. Ces technologies ont toutefois montré des inconvénients en termes d'étanchéité et de coût associé.
Sur les petits véhicules, ou bien dans le cadre d'applications industrielles, les bacs de batteries sont de plus en plus souvent montés non plus dans un compartiment protégé, mais sont dans le châssis et ne sont de ce fait pas protégés. Ceci s'applique aux petits utilitaires légers, aux véhicules à deux ou trois roues et aux véhicules utilitaires classiques ou bien aux véhicules spéciaux ou industriels.
Ainsi, l'obtention d'un IP élevé, de type IP67, permettant le nettoyage du véhicule au nettoyeur haute pression, s'avère délicate dans le cadre d'un bac alu classique réalisé par assemblage de pièces mécanosoudées. Les bacs en acier, plus faciles à étanchéifier, se sont donc généralisés. La bonne tenue du bac à certaines sollicitations de pression des gaz, testée en particulier au moyen de tests d'emballement thermique, notamment avec les batteries de type NCM, a eu le même effet. Ces bacs en acier sont plus lourds et sont plus coûteux, notamment en raison de l'augmentation du prix de l'acier, alors que l'on recherche actuellement à obtenir des gains en densité.

### Exposé de l'invention

L'invention vise à remédier aux inconvénients de l'art antérieur en proposant un nouveau type d'assemblage de batterie électrique.
A cet effet, l'invention concerne une batterie électrique comportant un ensemble de cellules prismatiques génératrices d'énergie, dans laquelle :
   - la batterie comporte des colonnes formées par au moins certaines desdites cellules, les cellules des colonnes étant plaquées les unes contre les autres en étant maintenues solidaires entre elles par un moyen de compression exerçant sur les cellules une compression le long de ou sensiblement le long de l'axe longitudinal des colonnes,
   - au moins un composant d'isolation électrique est interposée entre deux cellules génératrices d'énergie consécutives de colonnes,
   - l'assemblage d'une colonne de cellules est réalisé dans un tube extrudé en aluminium, ladite colonne de cellules étant constituée d'une pluralité de cellules en interface avec une face interne d'un tube en aluminium.
L'aluminium permet d'obtenir des gains en termes de poids des batteries, par rapport à l'acier.

De plus, un autre avantage de l'aluminium par rapport à l'acier est qu'il ne nécessite pas de post traitement particulier contre l'oxydation.

La disposition selon l'invention permet également d'assurer une fonction de protection des cellules.

Selon un mode de réalisation, ladite batterie électrique comporte un bac et des ailettes dans la paroi latérale extérieure du bac.

Ceci favorise les échanges d'air, que ce soit de façon naturelle ou par ventilation.

Selon un mode de réalisation, ladite batterie électrique comporte un double fond, et des moyens de refroidissement, sous forme de circulation d'eau ou d'air, dans ledit double fond.

Ceci permet une meilleure évacuation thermique.

Selon un mode de mise en oeuvre particulier, ledit tube extrudé en aluminium possède un profil en O de section carrée ou rectangulaire,

Selon un mode de réalisation, les cellules sont comprimées entre deux plaques de compression, et les plaques de compression sont fixées au tube extrudé.

Selon un mode de réalisation, les cellules sont comprimées à partir d'un dispositif de fermeture en bout de pack, celui-ci étant ancré dans l'épaisseur de la section du tube extrudé.

Selon un mode de mise en œuvre particulier, le cadre du profil d'extrusion comporte un guide pour les colonnes.

Selon un mode de réalisation, la batterie comporte une plaque comportant un joint entre les pièces assurant la fermeture aux extrémités du tube extrudé et le plan dudit tube extrudé.

Selon un mode de réalisation, la batterie comporte une pièce ayant la forme interne du tube et comportant un joint sur ses contours extérieurs.

Selon un mode de réalisation, la batterie comporte un capot en résine moulée.

### Brève description des dessins

[Fig. 1] représente la batterie électrique selon l'invention, dans un mode de réalisation.
[Fig. 2] illustre également la batterie électrique selon l'invention, dans un mode de réalisation.
[Fig. 3] représente la batterie électrique mettant en œuvre un liquide de refroidissement, dans un mode de réalisation

### Description détaillée

La présente invention se rapporte à une batterie 100 électrique comportant un ensemble de cellules 102 prismatiques génératrices d'énergie.

La batterie 100 selon la présente invention comporte des colonnes 103, 104 formées par au moins certaines desdites cellules, les cellules 102 étant plaquées les unes contre les autres en étant maintenues solidaires entre elles par un moyen de compression 105, 106 exerçant sur les cellules 102 une compression le long de ou sensiblement le long de l'axe longitudinal des colonnes 103, 104.

Au moins un composant d'isolation électrique est interposé entre deux cellules génératrices d'énergie 102 consécutives d'au moins un arrangement.

Selon l'invention, l'assemblage d'une colonne de cellules 102 est réalisé dans un tube extrudé 101 en aluminium.

Selon l'invention, la colonne de cellules 102 est constituée d'une pluralité de cellules 102 en interface avec une face interne d'un tube 101 en aluminium.

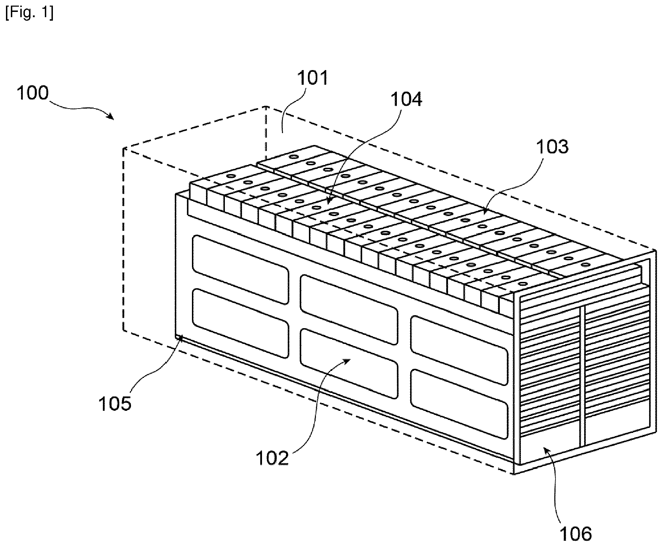

La Figure 1 représente la batterie électrique selon l'invention, dans un mode de réalisation.

On observe sur la Figure 1 les colonnes 103, 104 formées par des cellules 102.
On observe également sur la Figure 1 le tube extrudé 101 en aluminium ainsi que les moyens de compression 105, 106.

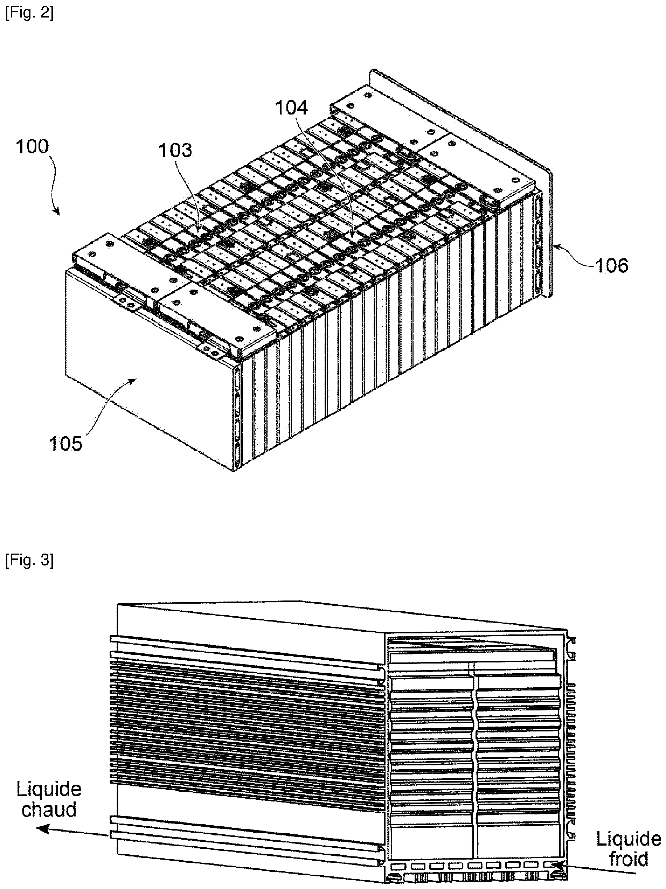

La Figure 2 illustre également la batterie électrique selon l'invention, dans un mode de réalisation.

La Figure 3 représente la batterie électrique mettant en œuvre un liquide de refroidissement, dans un mode de réalisation. On observe sur la Figure 3 le liquide de refroidissement traversant la batterie, qui passe de l'état froid à l'état chaud.

Les colonnes 103, 104 peuvent être fixées de différentes façon :
- Fixation traditionnelle sur la semelle du pack, obligeant à un perçage et à une reprise étanche au travers de la semelle. Les cellules sont comprimées entre deux plaques de compression puis les plaques de compression sont fixées à la base. Cette technologie nécessite une reprise et une bonne maitrise des longueurs, afin de concilier l'entr'axe des trous avec la longueur des colonnes, avec recours en tant que de besoin à des éléments dits « *spacers* » pour ajuster la longueur des colonnes selon les écarts d'épaisseur des cellules, sans outre comprimer les cellules.
- Compression à partir du dispositif de fermeture en bout de pack, celui-ci étant ancré dans l'épaisseur de la section du tube extrudé. Cette méthode permet de gagner en encombrement longitudinal et est donc particulièrement adaptée dans les petits packs avec des cellules de taille intermédiaire.
- Fixation des colonnes par un dispositif de fermeture.

Dans ce cas de compression entre la face arrière et la face avant de fermeture, il convient naturellement de disposer d'une première compression des colonnes afin de disposer de la cohésion nécessaire pour la manutention et la bonne tenue pendant l'assemblage des conducteurs et soudures en tête de cellules, le montage devant par nature se faire avant insertion dans la structure tubulaire puisque non accessible après.

La compression entre les faces avant et arrière sert donc essentiellement de blocage spatial de la colonne (blocage équivalent à des points de fixation) et non à une compression devant faire varier sa longueur, celle-ci ayant été figée et définie au moment des soudures en têtes de cellules. La géométrie des faces avant ou arrière avec les plaques de compression en bout de colonne peut être dessinée pour assurer ce blocage spatial et la bonne tenue en vibration au cours de la vie et du fonctionnement du pack.

Une façon de procéder peut-être celle de la compression par une bride ou ceinture venant bloquer les cellules et les deux plaques de compression. Ceci permet ainsi d'assurer la cohésion de la colonne avant le montage dans le pack, dans des conditions économiques en matière et coût.

Dans un mode de réalisation, un guide pour les colonnes peut avantageusement être prévu dans le cadre du profil d'extrusion, tout en veillant à préserver les souplesses géométriques pour permettre le glissement et le montage de la colonne dans le pack.

L'ensemble de la colonne est assemblé et équipé avant introduction dans le pack, à l'aide d'un outil de guidage approprié. Afin de pouvoir limiter la hauteur au-dessus des têtes de cellule tout en évitant les risques de court-circuit ou de heurt pendant le montage, on peut avantageusement prévoir un cache plastique ou en matériau équivalent venant se cliquer au-dessus des conducteurs et têtes de cellule, tout en veillant à ne pas gêner ni interférer en sécurité avec les valves de surpression des cellules.

De façon normale, l'ensemble BMS et électromécanique (fusible, relais, connecteur...) sont disposés à un bout du pack dit face avant. Dans ces conditions, et sous réserve du dispositif de blocage des colonnes et reprises d'effort, le pack peut être posé sur sa semelle, sur une face latérale ou debout sur la face arrière. L'ensemble électromécanique et le BMS sont facilement accessibles pour la maintenance ultérieure.

L'étanchéité est constituée des pièces assurant la fermeture aux extrémités du tube extrudé.
- Soit par une simple face avec un joint ou collage entre ces pièces et le plan du tube extrudé.
- Soit par une pièce ayant la forme interne du tube et comportant une face avec un joint ou un collage sur ses contours extérieurs.

Dans un mode de réalisation aux fins d'optimisation et afin de pouvoir orienter le connecteur latéralement tout en le mettant en bout de pack, il est possible de limiter la longueur du tube en aluminium extrudé de la longueur de la colonne plus quelques centimètres éventuels. L'extrémité abritant l'électromécanique (et le cas échéant la BMS) peut alors se placer sous un capot résine de forme appropriée moulée à cet effet. Ceci permet entre autres une sortie de côté du connecteur. Le cas échéant, l'électromécanique peut même être placée dans une boite plastique ou résine légèrement déportée. Ce mode capot plastique permet de gagner en poids et potentiellement en coût, sous réserve de la longueur des séries. Il est également plus cohérent avec le mode de blocage des colonnes présenté ci-dessus, celui-ci nécessitant normalement une faible sur-longueur du tube extrudé par rapport à l'extrémité de la colonne afin de permettre un bon blocage sans flambement du dispositif de blocage. Le cas le plus optimum est alors celui d'une prolongation de quelques centimètres permettant le positionnement du BMS puis du placement de l'électromécanique sous le capot en excroissance.

Il est intéressant de recourir à une structure en aluminium extrudé, conformément à la présente invention, pas simplement selon un profil en U comme habituel dans l'industrie, mais selon un profil en O de section carrée ou rectangulaire, adapté au format de la cellule prismatique.

Le recours à une telle structure extrudée est intéressant par optimisation de la matière et le faible coût des technologies actuelles correspondantes, dès lors que produites en grande série.

Cette structure permet une étanchéité plus facile aux extrémités, soit par un joint s'appuyant sur le plan coupé de la forme extrudée, soit par un joint entre des faces s'insérant dans la forme extrudée et les flans internes de cette dernière.

La structure selon la présente invention permet d'intégrer la question de l'évacuation thermique.

Cette technologie permet d'intégrer à faible coût certaines contraintes longitudinales de profil comme toute technologie d'extrusion.

En cellules prismatiques, elle repose sur la mise en place de colonnes longitudinales, le profil carré ou rectangulaire étant adapté au plus juste aux dimensions des cellules, que ce soit en mono-colonne pour des cellules de section importante, ou en bi-colonne ou tri-colonne, pour des cellules prismatiques de plus petite taille, une limite étant liée à la dimension limite de l'extrusion et à la bonne tenue des matériaux.

La configuration selon la présente invention permet de garder la base des cellules au contact de la semelle du pack, ou éventuellement de la semelle et d'une des faces latérales, afin d'assurer tout à la fois le calage mécanique et vibratoire et la conductivité thermique, par un gel ou toute autre matériau fibré conducteur thermique et isolant électrique.

Aux fins d'une meilleure évacuation thermique, on peut :
- Soit prévoir des ailettes dans la paroi latérale extérieure du bac, afin de favoriser les échanges d'air, que ce soit de façon naturelle ou par ventilation.
- Soit dans les cas où ce serait nécessaire prévoir un double fond permettant de faire passer dans la semelle un dispositif de refroidissement, sous forme de circulation de liquide de refroidissement ou d'air. Cette opportunité est en outre nécessaire dans le cas de cellules de puissance, type PHEV, qui nécessitent un refroidissement actif.

Dans tous les cas, ce refroidissement peut alors se faire par l'extérieur, sans communication avec l'intérieur du pack, ce qui le protège d'autant par rapport aux enjeux d'étanchéité ou d'air chaud humide ou d'air marin.

La solution selon la présente invention garantit la tenue à l'environnement extérieure du système intégrant le pack batterie, sans ajout de systèmes de protection complémentaires d'étanchéité, de simplification d'assemblage (étanchéité, corrosion).

La solution selon la présente invention permet une simplification du mode d'assemblage (possibilité d'avoir une seule direction de montage des pièces.

La solution selon la présente invention permet également une réduction du nombre de pièces à assembler (par exemple : fusion des faces extérieures et des plaques de compression).

La solution selon la présente invention permet également une optimisation de la densité volumique et massique.

La solution selon la présente invention permet également une intégration d'un système de refroidissement externe directement dans le profil extrudé.

## Revendications

1. Batterie (100) électrique comportant un ensemble de cellules (102) prismatiques génératrices d'énergie, **caractérisée en ce que**
- la batterie comporte des colonnes (103, 104) formées par au moins certaines desdites cellules, les cellules (102) des colonnes (103, 104) étant plaquées les unes contre les autres en étant maintenues solidaires entre elles par un moyen de compression (105, 106) exerçant sur les cellules (102) une compression le long de ou sensiblement le long de l'axe longitudinal des colonnes,
- au moins un composant d'isolation électrique est interposée entre deux cellules génératrices d'énergie (102) consécutives de colonnes (103, 104),
- l'assemblage d'une colonne (103, 104) de cellules (102) est réalisé dans un tube (101) extrudé en aluminium, ladite colonne (103, 104) de cellules (102) étant constituée d'une pluralité de cellules (102) en interface avec une face interne d'un tube en aluminium.

2. Batterie (100) électrique selon la revendication 1, **caractérisée en ce qu'**elle comporte un bac et des ailettes dans la paroi latérale extérieure du bac.

3. Batterie (100) électrique selon la revendication 1, **caractérisée en ce qu'**elle comporte un double fond, et des moyens de refroidissement, sous forme de circulation d'eau ou d'air, dans ledit double fond.

4. Batterie (100) électrique selon l'une des revendications précédentes, **caractérisée en ce que** ledit tube extrudé en aluminium possède un profil en O de section carrée ou rectangulaire.

5. Batterie (100) électrique selon l'une des revendications précédentes, **caractérisée en ce que** les cellules (102) sont comprimées entre deux plaques de compression, et **en ce que** les plaques de compression sont fixées à la base de la batterie (100).

6. Batterie (100) électrique selon l'une des revendications 1 à 4, **caractérisée en ce que** les cellules (102) sont comprimées à partir d'un dispositif de fermeture en bout de pack, celui-ci étant ancré dans l'épaisseur de la section du tube extrudé.

7. Batterie (100) électrique selon l'une des revendications précédentes, **caractérisé en ce que** le cadre du profil d'extrusion comporte un guide pour les colonnes.

8. Batterie (100) électrique selon l'une des revendications précédentes, **caractérisé en ce qu'**elle comporte une plaque comportant un joint entre les pièces assurant la fermeture aux extrémités du tube extrudé et le plan dudit tube extrudé.

9. Batterie (100) électrique selon l'une des revendications précédentes, **caractérisé en ce qu'**elle comporte une pièce ayant la forme interne du tube et comportant un joint ou un collage sur ses contours extérieurs

10. Batterie (100) électrique selon l'une des revendications précédentes, **caractérisé en ce qu'**elle comporte un capot en résine moulée.
